# EUROPÄISCHE PATENTSCHRIFT

(11) **EP 1 161 393 B1**
(45) Veröffentlichungstag und Bekanntmachung des Hinweises auf die Patenterteilung: **28.07.2004**
(21) Anmeldenummer: 00909337.8
(22) Anmeldetag: 08.03.2000
(51) Int. Cl.: B65G 53/60, B65G 53/24

(54) **KAPPENABSAUGUNGVORRICHTUNG**
DEVICE FOR CAP REMOVAL BY SUCTION
DISPOSITIF D'ASPIRATION DE CAPUCHON

(30) Priorität: 15.03.1999 DE 19911349
(43) Veröffentlichungstag der Anmeldung: 12.12.2001
(73) Patentinhaber: Olympus Diagnostica GmbH, 20097 Hamburg (DE)
(72) Erfinder: HOFFMANN, Uwe, D-59399 Olfen (DE)
(74) Vertreter: Schaefer, Konrad, Dipl.-Phys.
(86) Internationale Anmeldenummer: PCT/EP2000/001988
(87) Internationale Veröffentlichungsnummer: WO 2000/055076

(56) Entgegenhaltungen:
- US-A- 4 947 903

## Beschreibung

Die vorliegende Erfindung betrifft eine Absaugvorrichtung für Verschlüsse von Probenbehältern mit den Merkmalen des Oberbegriffs des Anspruchs 1.

Derartige Absaugvorrichtungen sind in automatischen Anlagen beispielsweise zur Öffnung von Blutprobenbehältern vorgesehen. Die Blutproben oder sonstige zu analysierende Körperflüssigkeiten sind üblicherweise in Glas- oder Kunststoffröhrchen vorhanden, die mit einem Gummistopfen oder einem Schraubdeckel verschlossen sind. Die Probenbehälter werden in eine Förderkette gesetzt und einzeln von einem Greifer durch drehende und gleichzeitig ziehende Bewegung geöffnet. Der so von dem Probenbehälter entfernte Verschlußstopfen oder die Verschlußkappe wird abgesaugt und in einen Sammelbehälter gegeben. Die hierfür vorgesehene Absaugvorrichtung ist weitgehend baugleich mit den als Industriesaugern bekannten Staubsaugern, bei denen auf einem Vorratsbehälter ein Gebläse aufgesetzt ist und der Sauganschluß an der Öffnungsvorrichtung angeschlossen ist. Eine entsprechende Handlingseinrichtung für Blut-proben ist aus der DE-A-19517439.9 bekannt.

Außerdem sind für den gleichen Zweck Absaugungen bekannt, die mit Druckluftinjektoren arbeiten. Hier müssen zum, einen große Mengen an Druckluft verfügbar sein, zum anderen muß die gesamten Druckluft gefiltert werden, um Aerosole aus der Luft herauszufiltern. Der apparative Aufwand ist sehr hoch.

Problematisch bei den Vorrichtungen nach dem Stand der Technik ist, daß zum einen die Absaugvorrichtungen voluminös und aufgrund der hohen Motorleistung relativ laut sind und zum anderen gerade bei der Untersuchung von Blutproben und anderen medizinischen Proben eine Filterung nur in unzureichender Weise erfolgen kann. Schließlich ist bei den bekannten Vorrichtungen in der Praxis problematisch, daß der gesamte Sammelbehälter, der auch Träger der Gebläseeinheit ist, zum Entleeren aus dem Gerät entfernt werden muß, wodurch eine Unterbrechung des reihenweisen automatischen Öffnungsvorgangs erforderlich wird.

Aus der US-A-4 947 903 ist eine gattungsgemäße Konstruktion bekannt, die zwar zum Absaugen von Verpackungsmaterial bestimmt ist, jedoch auch für die vorliegenden Zwecke verwendbar ist. Bei ihr ist das Gegengewicht derart bemessen, daß die Verschlußklappe bei abgeschaltetem Gebläse stets offen steht. Wird das Gebläse angeschaltet, so muß die Klappe zunächst mit einer saug- bzw. druckseitig vom Gebläse betätigten Hilfseinrichtung geschlossen werden. Erst dann kann sie vom Unterdruck gehalten werden.

Die Aufgabe der vorliegenden Erfindung besteht darin, für die eingangs genannte Zwecke eine einfachere Absaugvorrichtung zu schaffen.

Diese Aufgabe wird mit den Merkmalen des Anspruches 1 gelöst. Bei der erfindungsgemäßen Konstruktion ist das Gegengewicht derart bemessen, daß die Verschlußklappe bei leerem Behälter und abgeschaltetem Gebläse in Schließstellung steht. Bei Einschalten des Gebläses kann sich also sofort im Sammelbehälter Unterdruck ausbilden. Eine gesonderte Einrichtung zum Schließen der Verschlußkappe, wie beim Stand der Technik, kann daher entfallen. Die Konstruktion wird wesentlich einfacher und kostengünstiger. Wird das Gebläse abgeschaltet, also ohne Unterdruck im Sammelbehälter, öffnet sich die Verschlußklappe automatisch dann, wenn sie mit angesaugtem Verschlüssen von Probebehältern belastet ist und entleert diese, um sich dann automatisch wieder zu schließen.

Vorteilhaft sind die Merkmale des Anspruches 2 vorgesehen. Hierdurch wird ein geordnetes und gezieltes Abgeben der auf der Verschlußklappe befindlichen Verschlüsse von Probenbehältern ermöglicht.

Vorteilhaft sind die Merkmale des Anspruches 3 vorgesehen. Auf diese Weise wird bei geringer Antriebsleistung und Geräuschentwicklung eine gute Saugleistung erzielt.

Vorteilhaft sind die Merkmale des Anspruches 4 vorgesehen. Ein solcher Filter macht die erfindungsgemäße Absaugvorrichtung für die genannten medizinischen Zwecke besonders geeignet. Dabei sind vorteilhaft die Merkmale des Anspruches 5 vorgesehen, die die Wartung der Absaugvorrichtung vereinfachen.

Im folgenden wird eine Ausführungsform der vorliegenden Erfindung an Hand der Zeichnung beschrieben.

Es zeigt:

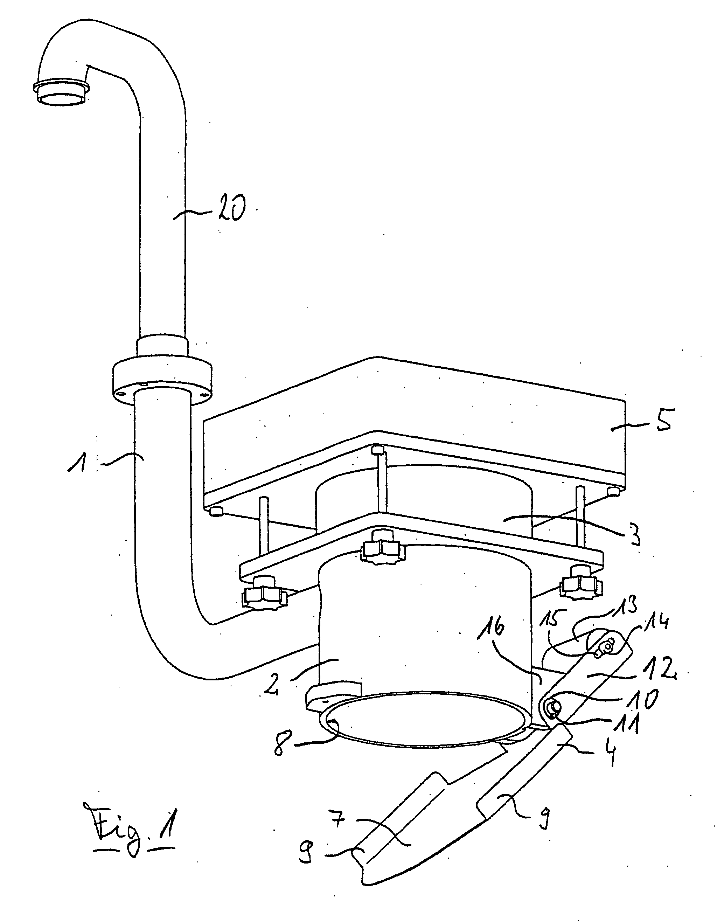

- Figur 1:: Eine erfindungsgemäße Absaugvorrichtung in einer perspektivischen Darstellung.

Die Darstellung gemäß Figur 1 zeigt die Absaugvorrichtung 1 in einer perspektivischen Darstellung bezüglich der Einbaulage schräg von unten. In der Figur 1 ist eine erfindungsgemäße Absaugvorrichtung mit einem Saugkanal 1 dargestellt, der in einen Sammelbehälter 2 mündet. Der Sammelbehälter 2 trägt an seiner Oberseite eine Filterkassette 3 und an seiner Unterseite eine Verschlußklappe 4, die gleichzeitig die Bodenwand des Sammelbehälters bildet. Ein Radialgebläse 5 ist an der Oberseite der Filterkassette 3 vorgesehen, so daß dem Gebläses 5 die bereits gefilterte Abluft zugeführt wird.

Die Verschlußklappe 4, die in der Figur 1 in geöffnetem Zustand gezeichnet ist, weist eine Flachseite 7 auf, die eine untere Öffnung 8 des Sammelbehälters 2 vollständig abdecken kann. Die Flachseite 7 ist an zwei gegenüberliegenden Seiten von senkrecht zu der Flachseite 7 orientierten Führungsabschnitten 9 begrenzt, die einstückig an die Flachseite 7 angeformt sind. Weiter weist die Verschlußvorrichtung 4 eine Lagerung 10 für eine Schwenkachse 11 auf, die im Bereich eines U-förmig gestalteten Abschnitts 12 angeordnet ist. Das U-förmige Profil 12 trägt weiterhin in seinem von der Flachseite 7 wegweisenden Endbereich ein Gegengewicht 13, das mit Befestigungsschrauben 14 in Langlöchern 15 verschieblich angeordnet ist. Die Schwenkachse selbst ist schließlich in angeformten Fortsätzen 16 des Sammelbehälters 2 befestigt, wodurch die Verschlußvorrichtung 4 in einer definierten Position an dem Sammelbehälter 4 schwenkbar angeordnet ist.

In der Praxis kann die insoweit beschriebene Absaugvorrichtung beispielsweise in einen Probenhandlingautomaten zur automatischen Öffnung von Blutproben oder anderen Probenbehältern eingebaut werden. Dabei wird der Saugkanal über ein Rohr 20 zu einem Kappenabdreher geführt. Die übrige Absaugvorrichtung wird so montiert, daß die Filterkassette 3 unterhalb der Grundplatte der Probenhandlingseinrichtung angeordnet wird und im übrigen unterhalb des Sammelbehälters 2 ein Raum vorgesehen wird, in dem ein Abfallbehälter oder ein Abfallsack angeordnet werden kann.

Im Betrieb arbeitet die insoweit beschriebene Vorrichtung wie folgt:

Das Gegengewicht 13 der Verschlußvorrichtung 4 wird so eingestellt, daß die Verschlußvorrichtung 4 im Ruhezustand, d. h. bei ausgeschaltetem Gebläse und ohne im Sammelbehälter 2 befindliche Verschlußkappen ganz oder nahezu die Öffnung 8 verschließt. Hiervon ausgehend wird das Gebläse 5 in Betrieb gesetzt und erzeugt in dem Sammelraum 2 einen Unterdruck, der die Flachseite 7 gegen die Öffnung 8 saugt und dort zuverlässig fixiert. Die Saugseite des Gebläses steht in kommunizierender Verbindung mit dem Saugkanal 1 und dem Rohr 20, das wiederum in einer nicht dargestellten Vorrichtung zum Öffnen von Verschlußkappen mündet. Da die Filterkassette 3 an der Saugseite des Gebläses 5 angeordnet ist, ist der gesamte mit Aerosol belastete Raum im Betrieb mit,einem Unterdruck beaufschlagt, so daß eventuelle Undichtigkeiten zu einem Nebenlufteintritt, nicht aber zur unkontrollierten Freisetzung von Aerosolen führen können. Die Druckseite des Gebläses 5 wird ins Freie geführt. Unterhalb der Absaugvorrichtung steht ein Abfallbehälter geeigneter Größe.

Eine im Bereich der Öffnung des Rohres 20 abgeschraubte oder abgezogene Verschlußkappe eines Probenbehälters wird dann von der Öffnungsvorrichtung freigegeben und durch den Luftstrom in das Rohr 20 gesaugt. Von dort gelangt es über den tangentiel angesetzten Saugkanal 1 in den Sammelbehälter 2, wo die Luftströmung sich aufgrund des steigenden Querschnitts verlangsamt und die Kappe oder der Stopfen in Richtung der Schwerkraft nach unten auf die Flachseite 7 der Verschlußeinrichtung 4 fällt. Dort bleibt die Kappe zunächst liegen. Die nächste anfallende Kappe wird bei serienweisem Öffnen von Probenbehältern ebenso dorthin gelangen. Eventuell mit dem Luftstrom gesaugte Aerosole, die von der Probe freigesetzt werden oder an der Verschlußkappe oder dem Verschlußstopfen haften, werden in die Filterkassette 3 geleitet und dort mit gutem Wirkungsgrad zurückgehalten. Dabei empfiehlt es sich für medizinische Proben insbesondere, einen Filter mit einem Abscheidegrad von mindestens 95% bei 0,2 µm Partikelgröße zu wählen. Die Abluft kann dann unbedenklich in das Laboratorium geleitet werden.

Nach einer Anzahl von Öffnungsvorgängen füllen die abgezogenen oder abgeschraubten Verschlüsse nahezu den gesamten Sammelbehälter 2. Die Steuerung des Probenhandlingsautomaten schaltet dann das Gebläse 3 für einen definierten Zeitraum ab, so daß der Unterdruck im Sammelbehälter 2 absinkt. Das auf der Flachseite 7 der Verschlußvorrichtung 4 lastende Gewicht der Stopfen führt dann dazu, daß die Verschlußvorrichtung 4 in die in Figur 1 dargestellte geöffnete Stellung verschwenkt, wobei die Flachseite 7 und die Führungsabschnitte 9 gleichsam eine Rutsche für die Verschlußkappen bilden, entlang derer die Verschlüsse in den Abfallbehälter rutschen. Das Gegengewicht 13 bewirkt nach erfolgreicher Entleerung des Sammelbehälters 2 die Rückkehr der Verschlußvorrichtung 4 in die geschlossene Stellung, die durch Einschalten des Gebläses 5 und den dadurch entstehenden Unterdruck fixiert wird. Die Vorrichtung ist dann für weitere anfallende Verschlüsse bereit.

Die zum Entleeren des Sammelbehälters 2 erforderliche Abschaltung des Gebläses 5 kann von relativ kurzer Dauer sein, beispielsweise im Bereich von 5,- 10 Sekunden liegen. Diese Zeit ist bei dem üblichen Probenhandling von Blutproben oder dergleichen vertretbar und stellt keine Unterbrechung des regelmäßigen Analysevorgangs dar, weil die Probenröhrchen oder Probenbehälter in Paletten anfallen und nach einer gewissen Anzahl von geöffneten Probenbehältern die Palette gewechselt werden muß. Die Größe des Sammelbehälters 2 kann an die Größe und Anzahl der bei einer Palette anfallenden Verschlußstopfen angepaßt werden, so daß die Verschlüsse einer gesamten Palette in den Sammelbehälter 2 passen. Die Außerbetriebsetzung des Gebläses kann dann in das Intervall fallen, das zum Wechsel der Palette ohnehin erforderlich ist.

Vorteilhaft bei dieser Verfahrensweise ist, daß der unter der Absaugvorrichtung vorgesehene Abfallbehälter jederzeit ohne Außerbetriebsetzung der gesamten Anlage entleert werden kann, während bei herkömmlichen Absaugvorrichtungen die gesamte Anlage abgeschaltet werden muß, um den Abfallbehälter zu entleeren oder auszuwechseln. Außerdem müssen.die Abfallbehälter nicht, wie im Stand der Technik, unterdruckbeständig sein, da sie nicht evakuiert werden. So können auch Beutel oder Säcke zum Einsatz kommen, die später einfach und sicher zu verschließen sind.

Weiter ist in der Praxis von großem Vorteil, daß die Entleerung des Sammelbehälters 2 automatisch gesteuert werden kann, daß die zum Einsatz kommenden Radiallüfter 5 mit relativ geringer Leistung und damit relativ geringer Geräuschentwicklung betrieben werden können und daß eine zuverlässige Filterung beispielsweise krankheitserregender Keime möglich ist. Das Öffnen und Schließen der Verschlußvorrichtung kann allein durch Steuern der Betriebsspannung des Gebläses 5 erfolgen, so daß die Steuerung des gesamten Probenhandlingsautomaten nur diese eine Funktion bereitstellen muß.

Ein geeignetes Gebläse 5 ist beispielsweise das Produkt RG160-28/14N der Firma Papst GmbH, St. Georgen, Deutschland.

## Patentansprüche

1. Absaugvorrichtung für Verschlüsse von Probenbehältern, mit einem Saugkanal (1), einem Unterdruckraum, der einen Sammelbehälter (2) bildet, sowie mit einem im Betrieb einen Unterdruck in dem Sammelbehälter (2) erzeugenden Gebläse (5), wobei der Sammelbehälter (2) an seiner Unterseite eine Verschlußklappe (4) aufweist, die mit einer im wesentlichen horizontalen Schwenkachse (11) gelagert ist und ein derart bemessenes Gegengewicht (13) aufweist, daß die Verschlußkappe (4) in einer definierten Lage gehalten ist, **dadurch gekennzeichnet, daß** das Gegengewicht (13) derart bemessen ist, daß die Verschlußklappe (4) bei leerem Sammelbehälter (2) auch ohne Unterdruck geschlossen oder nahezu geschlossen ist und bei einem Wegfall des Unterdrucks unter dem Gewicht eines oder mehrerer Verschlüsse in eine geöffnete Stellung schwenkt.

2. Vorrichtung nach Anspruch 1, **dadurch gekennzeichnet, daß** die Verschlußklappe (4) in ihrer geöffneten Stellung eine Rutsche (7, 9) bildet, auf der die Verschlüsse aufgrund ihres Eigengewichts von der Verschlußklappe (4) herabfallen.

3. Vorrichtung nach Anspruch 1, **dadurch gekennzeichnet, daß** das Gebläse (5) ein Radialgebläse ist.

4. Vorrichtung nach Anspruch 1, **dadurch gekennzeichnet, daß** zwischen dem Sammelbehälter (2) und dem Gebläse (5) ein Filter (3) angeordnet ist, wobei der Filter (3) vorzugsweise eine Porengröße aufweist, die bei einer Parikelgröße von 0,2 µm einen Abscheidegrad von etwa 95 % aufweist.

5. Vorrichtung nach Anspruch 4, **dadurch gekennzeichnet, daß** der Filter (3) als Filterkassette auf der Saugseite des Gebläses (5) einsetzbar ist.

## Claims

1. A suction device for closures of sample containers including a suction passage (1), a vacuum space, which constitutes a reservoir (2), and a blower (5) which produces, in use, a vacuum in the reservoir (2), whereby the reservoir (2) has on its underside a closure cap (4), which is mounted with a substantially horizontal pivotal shaft (11) and has a counterweight (13) which is so dimensioned that the closure cap (4) is held in a defined position, **characterised in that** the counterweight (13) is so sized that, when the reservoir (2) is empty and also without a vacuum, the closure cap (4) is closed or nearly closed and pivots, when the vacuum drops off, into an open position under the weight of one or more closures.

2. Apparatus as claimed in Claim 1, **characterised in that** the closure cap (4) constitutes a chute (7, 9) in its open position, on which the closures fall from the closure cap as a result of their own weight.

3. Apparatus as claimed in Claim 1, **characterised in that** the blower (5) is a radial blower.

4. Apparatus as claimed in Claim 1, **characterised in that** arranged between the reservoir (2) and the blower (5) there is a filter (3), the filter preferably having a pore size which has a separation rate of about 95% at a particle size of 0.2 µm.

5. Apparatus as claimed in Claim 4, **characterised in that** the filter (3) may be inserted on the suction side of the blower (5) in the form of a filter cartridge.

## Revendications

1. Dispositif d'aspiration de capuchons de récipients d'échantillons muni d'un canal d'aspiration (1), d'une chambre de dépression formant collecteur (2) ainsi que d'un ventilateur (5) qui, lorsque le dispositif est en service, produit une dépression dans le collecteur (2), le collecteur (2) présentant à sa face inférieure un volet obturateur (4) logé sur un axe de pivotement (11) essentiellement horizontal et étant muni d'un contrepoids (13) qui maintient le volet obturateur (4) en une position définie, **caractérisé en ce que** la valeur du contrepoids (13) est telle que, même en l'absence d'une dépression, le volet obturateur (4) soit fermé ou pratiquement fermé lorsque le collecteur (2) est vide et qu'il bascule en position ouverte sous le poids d'un ou de plusieurs capuchons lorsque la dépression est supprimée.

2. Dispositif selon la revendication 1, **caractérisé en ce que** le volet obturateur (4) forme, en position ouverte, une glissière (7, 9) par laquelle les capuchons tombent sous leur propre poids du volet obturateur (4).

3. Dispositif selon la revendication 1, **caractérisée en ce que** le ventilateur (5) est une soufflante radiale.

4. Dispositif selon la revendication 1, **caractérisée en ce qu'**un filtre (3) est placé entre le collecteur (2) et le ventilateur (5), la taille des pores du filtre (3) étant de préférence telle que le degré de séparation soit d'environ 95 % pour une grosseur de particules de 0,2 µm.

5. Dispositif selon la revendication 4, **caractérisée en ce que** le filtre (3) est une cassette filtrante pouvant être mise en place du côté aspiration du ventilateur (5).
